# FASCICULE DE BREVET EUROPEEN

(11) **EP 2 246 212 B1**
(45) Date de publication et mention de la délivrance du brevet: **10.06.2015**
(21) Numéro de dépôt: 10161239.8
(22) Date de dépôt: 28.04.2010
(51) Int. Cl.: B60J 10/08

(54) **Ouvrant de véhicule muni d'un élément d'étanchéité**
Fahrzeugklappe mit einem Dichtungselement
Vehicle wing with a sealing element

(30) Priorité: 29.04.2009 FR 0952837
(43) Date de publication de la demande: 03.11.2010
(73) Titulaire: COMPAGNIE PLASTIC OMNIUM, 69007 Lyon (FR)
(72) Inventeur: Rajon, Alexis, 69004, LYON (FR); Cheron, Hugues, 01800, MEXIMIEU (FR)
(74) Mandataire: Remy, Vincent Noel Paul

(56) Documents cités:
- EP-A- 0 257 608
- DE-A1- 19 538 595
- DE-C1- 19 810 643
- DE-U1- 20 115 377
- US-A- 2 211 257

## Description

La présente invention concerne l'étanchéité d'un véhicule.

On connaît dans l'état de la technique un véhicule comprenant un ouvrant arrière tel qu'un hayon. Cet ouvrant est monté sur la caisse du véhicule de façon à être déplaçable relativement à la caisse entre une position ouverte et une position fermée dans laquelle il vient fermer une ouverture arrière ménagée dans la caisse.

L'étanchéité de l'habitacle du véhicule, au niveau de l'interface entre la caisse et le hayon, est assurée à l'aide d'un joint en élastomère, notamment en caoutchouc, agencé sur une nervure de la caisse dans une zone de la caisse apte à être en contact avec le hayon lorsque celui-ci est placé en position fermée sur la caisse. Le joint est appliqué tout autour de l'ouverture arrière de la caisse.

Le hayon est constitué de la façon suivante : il comprend un panneau intérieur rigide, ou caisson, recouvert d'un panneau de carrosserie, ou peau, agencé sur une surface du hayon destinée à être tournée vers l'extérieur du véhicule lorsque le hayon est monté sur le véhicule. L'étanchéité entre le caisson et la peau doit également être assurée, ce qui est effectué par collage.

Un système d'étanchéité caisse-hayon tel que celui décrit plus haut est susceptible de s'user relativement rapidement car, dans sa partie inférieure, le joint mis en place sur la caisse est situé juste en dessous de l'ouverture arrière du véhicule et est donc soumis à des sollicitations engendrées par l'appui de l'utilisateur sur le bord arrière de l'ouverture et à des frottements dus au déplacement d'objets lors du chargement et du déchargement du véhicule. L'usure du joint dans sa partie inférieure est susceptible d'engendrer des infiltrations d'eau dans l'habitacle ou peut nécessiter un changement relativement fréquent de la totalité du joint.

Le document DE 195 38 595 décrit l'état de la technique antérieure le plus proche.

La présente invention vise notamment a remédier à cet inconvénient.

A cet effet, la présente invention a pour objet un ouvrant de véhicule selon la revendication 1.

L'ouvrant est en particulier un hayon mais peut également être une ridelle de véhicule, par exemple.

Le joint est plus particulièrement agencé sur une paroi du caisson de l'ouvrant.

Lorsque l'utilisateur charge ou décharge l'habitacle par l'ouverture arrière, l'ouvrant est ouvert. Le joint étant ménagé sur l'ouvrant, il n'est pas présent dans la zone dans laquelle l'utilisateur est susceptible de s'appuyer ou dans laquelle les objets chargés dans l'habitacle ou déchargés de celui-ci frottent contre la caisse du véhicule.

En outre, du fait de sa fonction d'étanchéité, le joint a tendance à accumuler les salissures. Or, comme l'utilisateur ne s'appuie pas contre le joint lors du chargement et du déchargement puisque celui-ci est ménagé sur l'ouvrant, les risques que l'utilisateur se salisse lorsqu'il charge ou décharge le véhicule par l'arrière sont diminués lorsque le véhicule comporte un ouvrant selon l'invention.

Selon l'invention, l'ouvrant comporte un caisson et un panneau de carrosserie placé sur une surface du caisson destinée à être tournée vers l'extérieur du véhicule lorsque l'ouvrant est monté sur le véhicule, le panneau étant agencé de sorte qu'il comprend à sa périphérie une paroi longeant la paroi du caisson, le joint étant emboîté sur les deux parois superposées du caisson et du panneau.

Ainsi, un même joint est susceptible d'assurer l'étanchéité entre l'ouvrant et la caisse du véhicule et au moins partiellement l'étanchéité entre le caisson et le panneau de carrosserie de l'ouvrant.

Cela permet donc de diminuer les coûts de fabrication de l'ouvrant, un seul joint assurant ces deux fonctions. En outre, comme l'étanchéité entre le panneau de carrosserie et le caisson est assurée à l'aide du joint, il n'est plus nécessaire de coller le caisson et le panneau sur tout leur pourtour pour assurer l'étanchéité de l'ensemble. La fixation du panneau peut ainsi être effectuée par d'autres moyens, plus simples à mettre en oeuvre et plus économiques.

En outre, comme le panneau et le caisson peuvent ne pas être collés, ils sont susceptibles d'être plus facilement démontables l'un par rapport à l'autre. La réparabilité du véhicule est alors augmentée en cas de petits chocs. On peut en effet dans ce cas uniquement changer le panneau de carrosserie si le choc s'avère ne pas avoir touché le caisson.

Selon l'invention, le joint est un premier joint, l'ouvrant comprenant un deuxième joint placé entre le panneau de carrosserie et le caisson à une extrémité du panneau longeant une ouverture centrale du caisson le premier joint étant également emboîté sur au moins une extrémité du deuxième joint selon la direction longitudinale de celui-ci. En effet, pour économiser des coûts de fabrication, l'ouvrant, notamment s'il s'agit d'un hayon, comprend généralement deux panneaux de carrosserie, situés respectivement au-dessus et en dessous de l'ouverture centrale de celui-ci, destinée à l'accueil d'une vitre. Comme le joint entoure le hayon, il ne peut assurer l'étanchéité entre le caisson et le panneau extérieur que sur trois côtés du panneau et non sur le côté du panneau longeant l'ouverture centrale du hayon. Dans ce cas, le hayon comprend un deuxième joint assurant l'étanchéité entre le caisson et le panneau sur ce côté longeant l'ouverture. Le deuxième joint est par exemple un joint adhésif, pincé entre le caisson et le panneau. L'étanchéité entre le panneau et le caisson est alors assurée sur ce côté du panneau par compression du deuxième joint. Le deuxième joint s'étend également sur le retour du caisson ou du panneau et peut de cette façon être emboîté dans le premier joint, pour garantir une très bonne étanchéité panneau/caisson à l'interface des premier et deuxième joint.

L'ouvrant selon l'invention peut également comprendre l'une ou plusieurs caractéristiques de la liste suivante :
- le caisson et le panneau comprennent à leur périphérie un retour essentiellement normal au reste de la paroi du caisson, le joint étant agencé sur ce retour. Le retour est alors agencé selon la direction longitudinale du véhicule sur une bonne partie du pourtour de l'ouvrant et le joint emboîté à son extrémité est compressé contre la paroi de la caisse essentiellement perpendiculaire à cette direction, lorsque le hayon est en position fermée. De cette façon, l'étanchéité est assurée de manière efficace même si le caisson et le panneau ont des formes relativement simples,
- le joint comprend une première partie conformée en U pour être emboîtée sur les parois du panneau et du caisson et une deuxième partie s'étendant dans le prolongement de ces parois et configurée en lèvre ou en tube. La deuxième partie est apte à être compressée contre la paroi de la caisse du véhicule lorsque l'ouvrant est en position fermée sur la caisse. Il est avantageux que la deuxième partie soit en forme de tube car cela permet d'assurer une meilleure étanchéité,
- l'ouvrant comprend au moins un élément de fixation du caisson et du panneau au niveau de leur périphérie, l'élément de fixation comprenant au moins une languette déformable apte à se plaquer contre le caisson ou le panneau. De cette façon, les moyens de fixation peuvent être placés sous le joint sans pour autant augmenter localement l'épaisseur de l'ouvrant, ce qui permet d'éviter de déformer localement le joint et permet d'améliorer l'étanchéité de la liaison du panneau et du caisson. L'esthétique de l'ouvrant avec une telle configuration est également améliorée, les éléments de fixation, cachés par le joint et n'augmentant pas localement l'épaisseur de l'ouvrant, étant invisibles pour un observateur extérieur. En particulier, l'élément de fixation est conformé en U et comprend une partie centrale reliant deux tiges latérales, les deux tiges latérales formant languettes déformables. Il peut également comprendre un corps central se séparant à son extrémité en au moins deux languettes déformables. Pour améliorer la liaison entre le panneau et le caisson, les éléments de fixation peuvent comprendre au moins une griffe apte à se planter dans la paroi du panneau et/ou le caisson,
- le premier joint comprend au moins une armature métallique, le matériau élastomère étant de préférence surmoulé sur l'armature, l'armature comprenant au moins un élément de fixation du caisson et du panneau. Le joint cumule alors les fonctions de fixation et d'étanchéité. Cela facilite la liaison du panneau et du caisson qui peut alors être effectuée en une unique étape à l'aide d'un seul élément,
- le premier joint est de section constante. Il peut alors être réalisé par extrusion, qui est un procédé économique pour la fabrication d'un long joint tel que celui-ci. Ainsi, si le joint comprend des fonctions supplémentaires, telles que des fonctions de fixation, elles ne sont pas prévues localement sur le premier joint,
- le caisson comprend deux montants latéraux munis chacun d'une gorge agencée sur la surface intérieure du caisson, le premier joint étant apte à être agencé dans la gorge. Le premier joint peut également comprendre des moyens pour la fixation, notamment par encliquetage, du joint dans la gorge, de préférence situés sur la face extérieure du joint. De cette façon, l'épaisseur des montants latéraux n'est pas diminuée du fait de la présence du joint, ce qui permet de conserver un caisson ayant une rigidité satisfaisante sans lui ajouter des moyens de renfort relativement à un caisson de l'état de la technique. Les moyens d'encliquetage du joint dans la gorge permettent de garantir une meilleure tenue du joint dans la gorge lorsque l'ouvrant est en service. Optionnellement, une nervure est agencée dans la gorge à au moins une extrémité longitudinale de celle-ci, la nervure comprenant au moins une partie dont la hauteur diminue continûment. La nervure s'étend selon la direction longitudinale de la gorge. La diminution d'épaisseur de la nervure est également effectuée selon cette direction. Une telle nervure permet d'assurer la continuité de la liaison entre le premier joint et le caisson, notamment entre les endroits où le premier joint est mis en place sur le retour formant nervure et ceux où il est mis en place dans la gorge,
- le joint est réalisé en élastomère, notamment en caoutchouc, éventuellement en deux matériaux élastomères différents, un premier matériau, plus rigide, constituant la partie du joint s'emboîtant sur le caisson et un deuxième matériau, souple, constituant la partie du joint destinée à être en contact avec la caisse lorsque l'ouvrant est en position fermée,
- le caisson est réalisé au moins partiellement en matière thermoplastique, tel que du polypropylène, ou en un matériau thermodurcissable, ces matériaux étant de préférence renforcés de fibres,
- le panneau extérieur est réalisé au moins partiellement en un matériau thermoplastique tel que du polypropylène.

L'invention sera mieux comprise à la lecture de la description qui va suivre, donnée uniquement à titre d'exemple et faite en se référant aux dessins dans lesquels :
- la figure 1A représente une vue en perspective d'une moitié de hayon formant un ouvrant selon un mode de réalisation particulier de l'invention,
- la figure 1B représente une vue en perspective d'un détail de la partie inférieur du hayon de la figure 1,
- la figure 2 est une vue en coupe selon A-A du hayon de la figure 1B, lorsque le hayon est en position de fermeture sur la caisse,
- la figure 3A est une vue en perspective d'un élément de fixation du hayon de la figure 2, en position d'insertion,
- la figure 3B est une vue en perspective de l'élément de fixation du hayon de la figure 2, en position de fixation,
- la figure 4A est une vue d'un autre élément de fixation convenant pour un hayon selon l'invention,
- la figure 4B est une vue en perspective d'un détail de l'élément de fixation de la figure 4A.
- la figure 5 est une vue en perspective d'un détail d'un montant du caisson de hayon de la figure 1, avant montage du joint,
- la figure 6A est une vue en coupe du montant du hayon de la figure 5 selon B-B, lorsque le caisson est pourvu du joint,
- la figure 6B est une vue en coupe du montant du hayon de la figure 5 selon C-C, lorsque le caisson est pourvu du joint,
- la figure 7A est une vue en perspective depuis la face intérieure d'un détail du hayon situé sous l'ouverture du hayon de la figure 1 et au niveau du montant,
- la figure 7B est une coupe selon un plan vertical longitudinal d'un détail de la figure 7A,
- la figure 8 est une vue en coupe du hayon de la figure 1 selon D-D au niveau de la zone située sous l'ouverture réservée à la vitre arrière.

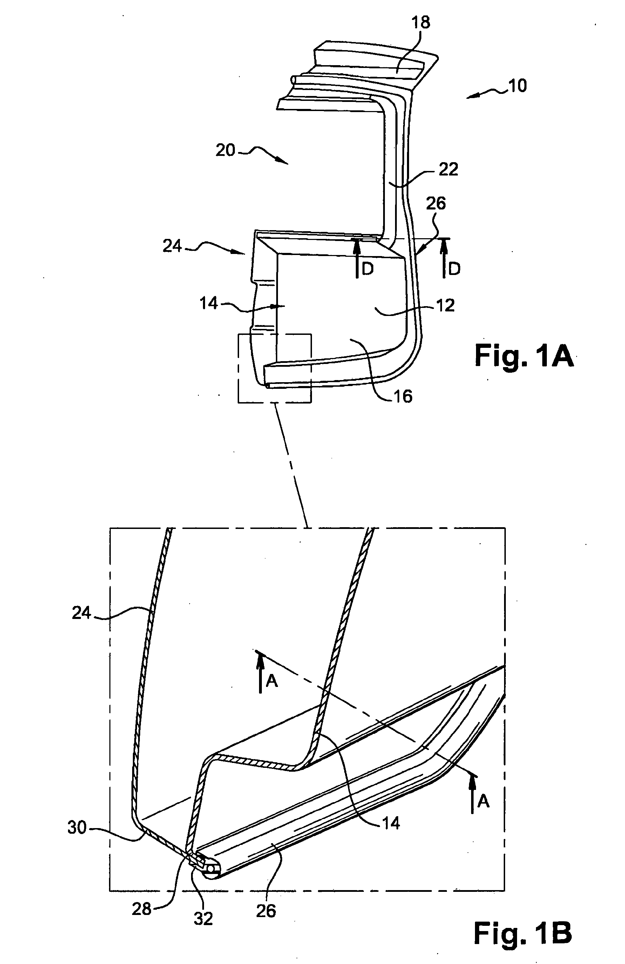

On a représenté sur les figures un hayon 10 selon un mode de réalisation particulier de l'invention. La face représentée sur la figure 1A est la face 12 du hayon tournée vers l'intérieur du véhicule lorsque que le hayon est monté sur une caisse de véhicule.

Le hayon comprend un caisson 14 comprenant une partie inférieure 16, une partie supérieure 18 et une ouverture 20 agencée entre les parties supérieure 18 et inférieure 16. Les parties supérieure 18 et inférieure 16 sont reliées entre elles par deux montants latéraux 22 (un seul étant représenté sur la figure 1A).

Le hayon comprend également un panneau de carrosserie inférieur 24 agencé sur la face du hayon destinée à être tournée vers l'extérieur du véhicule lorsque le hayon est monté sur le véhicule. Ce panneau recouvre la partie inférieure 16 du caisson.

Le caisson 14 est réalisé en un matériau thermoplastique, tel que le polypropylène et est renforcé de fibres. Il comprend également des inserts métalliques pour assurer la rigidité du caisson. Le panneau 24 est réalisé en un matériau thermoplastique.

Comme on le voit sur la figure 1A, le hayon comprend également un joint 26 agencé sur la face intérieure 12 du caisson sur tout le pourtour du hayon. Ce joint est agencé en périphérie du caisson de façon à assurer l'étanchéité entre le hayon et la caisse du véhicule. Il est en effet agencé sur une zone du caisson destinée à être en contact avec la caisse.

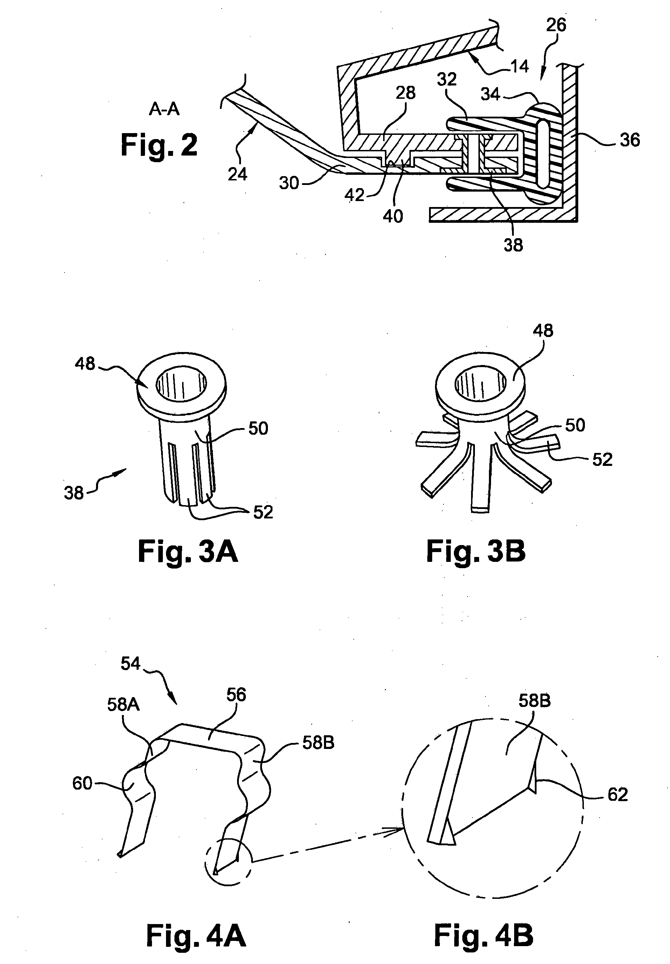

Comme on le voit mieux sur les figures 1B et 2, le joint 26 est relié au caisson 14 et au panneau de carrosserie 24 à l'aide d'une liaison mécanique, en particulier par emboîtement.

A cet effet, le caisson comprend un retour 28 essentiellement perpendiculaire au reste de la paroi du caisson et s'étendant essentiellement selon la direction longitudinale du véhicule lorsque le hayon est monté sur le véhicule en position fermée. Le retour est orienté vers l'avant du véhicule. Le panneau 24 comprend également un retour 30 conformé pour longer le retour 28 du caisson.

Le joint 26 comprend quant à lui une première partie 32 conformée en U et dimensionnée pour contenir dans sa cavité les deux parois du panneau et du caisson. Du fait de cette première partie, le joint 26 assure également en partie l'étanchéité à l'interface entre le caisson 14 et le panneau de carrosserie 24.

Le joint 26 comprend également une deuxième partie 34 conformée en tube, c'est à dire de section essentiellement cylindrique et comprenant un évidement longitudinal en son centre. Comme on le voit sur la figure 2, cette deuxième partie 34 est agencée pour être en contact avec la caisse 36 du véhicule lorsque le hayon est monté sur le véhicule et est placé en position fermée relativement à la caisse. C'est cette deuxième partie qui permet d'assurer l'étanchéité entre la caisse et le hayon.

Le joint 26 est réalisé en élastomère, notamment en caoutchouc. Il est de section constante et est fabriqué par extrusion pour limiter les coûts de fabrication. La première partie est notamment réalisée en un élastomère relativement rigide alors que la deuxième partie est réalisée en un élastomère plus souple.

Comme on le voit plus particulièrement sur la figure 2, le hayon comprend également des éléments de fixation 38 arrangés en périphérie du panneau et du caisson, au niveau des retours 28, 30, dans des orifices superposés du caisson et du panneau prévus à cet effet. Il comprend également des moyens de positionnement du caisson relativement au panneau de carrosserie, constitués sur la figure 2 par une saillie 40 ménagée sur le caisson 14 et destinée à s'engager dans une rainure complémentaire 42 du panneau 24.

On va maintenant décrire plus en détails l'élément de fixation 38 à l'aide des figures 3A et 3B. Un tel élément 38 comprend une tête 48 et un corps central 50 percés. Le corps 50 se sépare à son extrémité libre en une pluralité de languettes 52 élastiquement déformable.

L'élément de fixation 38 est de ce fait introduit dans les orifices superposés du panneau et du caisson dans la position d'insertion représentée à la figure 3A, de sorte que sa tête se trouve côté panneau extérieur de l'assemblage. Sa tête pourrait également se trouver côté caisson mais la placer du côté panneau extérieur permet de faciliter le montage du caisson et du panneau.

Sa tête 48 forme une collerette permettant de retenir l'élément de fixation sur le panneau. Ensuite, une fois l'élément 38 en place avec la tête 48 en appui sur le panneau, les languettes 52 sont dépliées vers l'extérieur jusqu'à ce qu'elles prennent la position de la figure 3B, en se plaquant contre la paroi du caisson 14 ce qui permet d'empêcher le retrait accidentel de l'élément de fixation.

Un tel élément de fixation 38 peut être installé sur le hayon sans que l'épaisseur locale du hayon ne soit augmentée de façon significative. Il permet de ne pas perturber l'efficacité du joint destiné à recouvrir l'élément de fixation. En outre, ces éléments de fixation étant conformés de telle façon qu'ils peuvent être montés puis démontés aisément, la réparabilité du hayon est augmentée.

On a représenté sur les figures 4A et 4B un autre type d'élément de fixation 54 qu'on peut également utiliser pour fixer un caisson 14 et un panneau 24 de hayon de la figure 1. Un tel élément de fixation 54 comprend une partie centrale 56 destinée à être en appui sur le panneau extérieur 24. Cette partie centrale relie deux tiges latérales 58A, 58B essentiellement perpendiculaires à la partie centrale 56 lorsque l'élément 54 est en position d'insertion.

Ces tiges 58A, 58B, sont destinées à s'engager dans des orifices superposés du caisson 14 et du panneau 24 du hayon. Ils forment en outre des languettes déformables qui peuvent être déformées, une fois l'élément de fixation inséré dans les orifices correspondants, pour être plaquée contre la paroi du caisson 14. Ces languettes sont repliées vers l'extérieur de l'élément 54, de façon à éloigner leurs extrémités libres de la partie centrale 56.

L'élément 54 comprend également un bourrelet 60 ménagé sur chaque tige latérale. Ce bourrelet 60 forme un bourrelet de préclippage destiné à être mis en place dans les orifices de fixation du panneau et du caisson et permettant d'éviter que les éléments 54 se détachent du caisson et du panneau avant qu'ils soient placés en position de fixation.

L'élément 54 comprend également, comme on le distingue mieux à la figure 4B, des griffes 62 faisant saillie de l'extrémité libre de la languette 58B, sur la face de celle-ci destinée à être plaquée contre le caisson. Ces griffes 62 sont destinées à se planter dans le caisson 14 lorsque l'élément 54 est placé en position de fixation. Cela permet d'augmenter la rigidité et la robustesse de la fixation.

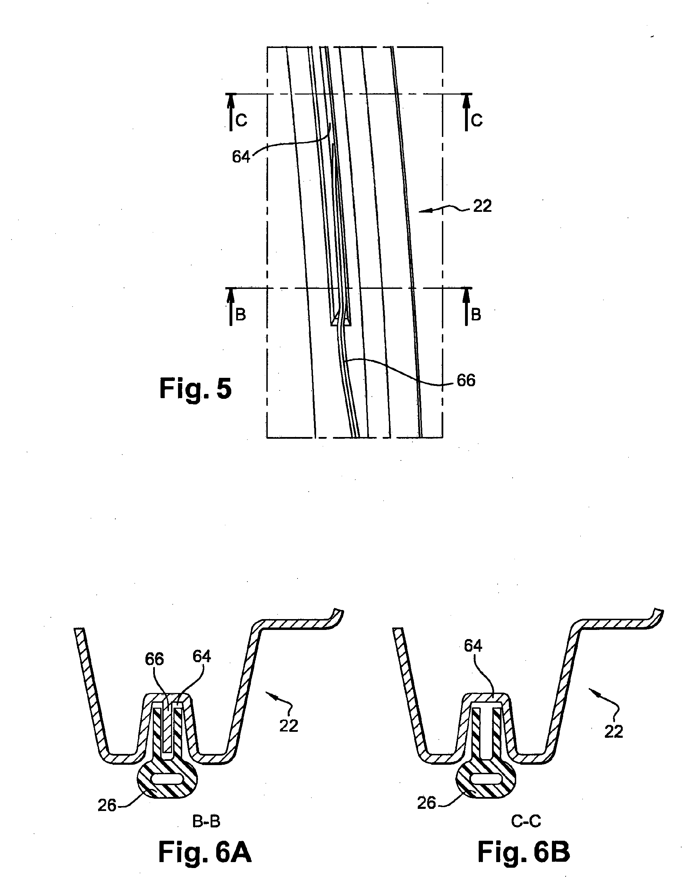

On va maintenant décrire, à l'aide des figures 5, 6A et 6B, le montant du caisson 14 du hayon de la figure 1. Comme on le voit sur la figure 5, le caisson comprend une gorge 64 s'étendant dans le montant 22, selon la direction longitudinale de celui-ci, correspondant sensiblement à la direction verticale lorsque le hayon est monté sur le véhicule. Le montant comprend également une nervure 66 s'étendant selon cette direction en dehors de la gorge 64 puis dans celle-ci. Une partie de la nervure située dans la gorge 64 présente une hauteur qui diminue continûment jusqu'à ce que la paroi supérieure de la nervure 66 rejoigne la paroi du caisson, la gorge ne présentant alors plus de nervure.

Comme on le voit sur les figures 6A et 6B, le joint 26 est tout d'abord agencé sur la nervure 66, puis dans la gorge 64, une fois la nervure disparue. Le fait que le montant comprenne une gorge permet de ne pas diminuer son épaisseur malgré la présence du joint sur le hayon et de ne pas modifier ainsi la rigidité du caisson 14 de ce fait. La nervure 66 permet d'effectuer la transition entre le positionnement du joint 26 sur les retours 28, 30 du caisson et du panneau inférieur 24 et son positionnement dans la gorge.

Le joint 26 assure l'étanchéité entre le panneau 24 et le caisson 14 sur seulement les trois côtés du panneau longeant les extrémités du hayon. Sur le quatrième côté du panneau 24, longeant l'ouverture 20, le joint 26 n'est pas présent, sachant qu'il s'étend sur les montants, et ne peut donc pas assurer l'étanchéité.

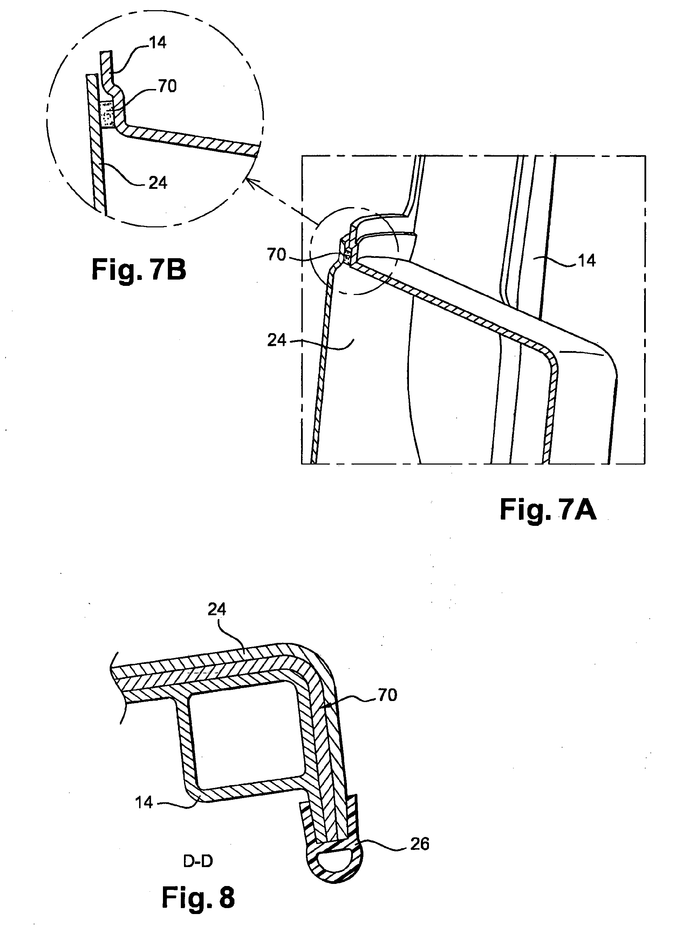

On va décrire à l'aide des figures 7 et 8 comment l'étanchéité à l'interface entre le panneau et le caisson est effectuée le long de la zone inférieure de l'ouverture 20 destinée à la vitre arrière.

Comme on le voit sur les figures 7A et 7B, un deuxième joint 70, également en élastomère, notamment en caoutchouc, est interposé entre le panneau 24 et le caisson 14 le long du bord supérieur du panneau 24. Ce joint est un joint adhésif qui est interposé entre le caisson et le panneau. L'étanchéité à l'interface du panneau et du caisson au niveau du bord supérieur du panneau est effectuée par compression de ce joint.

Ce joint 70 s'étend jusqu'à l'extrémité du retour 28, 30 et est emboîté dans le joint 26 avec les parois du caisson et du panneau. De cette façon la transition entre le premier joint 26 et le deuxième joint 70 est assurée de sorte qu'il n'y a pas d'infiltrations d'eau dans le hayon.

On notera que l'invention n'est pas limitée au mode de réalisation précédemment décrit.

Les matériaux du caisson, du panneau extérieur et des joints ne sont notamment pas limités à ce qui a été décrit. Le caisson ou le panneau pourrait par exemple être réalisé en un matériau thermodurcissable ou en un matériau métallique.

Le joint peut également ne pas présenter la forme décrite. Il peut être collé sur le caisson et ne comprendre qu'une partie en tube pour l'étanchéité avec la caisse. La deuxième partie peut également être conformée en lèvre d'étanchéité.

En outre, le joint peut comprendre dans sa première partie des moyens d'encliquetage sur le panneau et le caisson, agencés préférentiellement sur la face interne du U de celui-ci, de tels moyens de fixation permettant de consolider sa fixation sur ses éléments. Il peut également comprendre des moyens d'encliquetage, agencés sur la face externe du U pour consolider la fixation du joint 26 dans la gorge 64.

Le joint peut également présenter une section non constante. Il peut en outre permettre d'assurer l'étanchéité entre le caisson et le spoiler du hayon, pièce située dans la partie supérieure du hayon, au-dessus de l'ouverture 20. Dans ce cas, le caisson dans la partie supérieure et le spoiler peuvent également comprendre un retour à leur périphérie.

Le caisson peut également présenter une autre forme que celle décrite. Il peut notamment ne pas comprendre de gorge sur ses montants ou pas de retour pour l'agencement du joint. Dans ce cas, le panneau ne comprend pas de retour non plus.

Les éléments de fixation peuvent également être configurés différemment de ce qui a été décrit, c'est à dire qu'ils peuvent être des moyens de fixation par vissage, par rivetage ou par encliquetage. Tout type de moyens de fixation peut également comprendre des griffes et des bourrelet de pré-clippage tels que décrits en référence aux figures 4A et 4B.

Le joint 26 peut également comprendre au moins une armature métallique, sur laquelle est de préférence surmoulée la matière plastique, notamment élastomère, ces armatures métalliques formant localement les éléments de fixation.

Le joint 26 peut également comprendre un système anti-pincement dans le cas d'un hayon motorisé.

En outre, on remarquera que même un hayon ne présentant pas un joint tel que le joint 70 est un hayon selon l'invention. L'étanchéité au niveau du rebord supérieur du panneau de carrosserie inférieur peut être effectuée par tout moyen, de même que l'étanchéité à l'interface du premier et du deuxième joint.

L'ouvrant selon l'invention peut également ne pas être un hayon et constituer par exemple une ridelle.

## Revendications

1. Hayon (10) de véhicule comprenant sur une surface (12) destinée à être tournée vers l'intérieur du véhicule lorsque le hayon est monté sur le véhicule, un premier joint (26), réalisé de préférence en un matériau élastomère, s'étendant sur tout le pourtour du hayon, le hayon comprenant un caisson (14) et un panneau de carrosserie inférieur (24) placé sur une surface du caisson destinée à être tournée vers l'extérieur du véhicule lorsque le hayon est monté sur le véhicule, le panneau (24) étant agencé de sorte qu'il comprend à sa périphérie une paroi (30) longeant la paroi (28) du caisson, le premier joint (26) étant emboîté sur les deux parois superposées du caisson (14) et du panneau (24); le hayon étant **caractérisé en ce qu'**il comporte un deuxième joint (70) placé entre le panneau de carrosserie (24) et le caisson (14) à une extrémité du panneau longeant une ouverture centrale (20) du caisson, le premier joint (26) étant également emboîté sur au moins une extrémité du deuxième joint (70) selon la direction longitudinale de celui-ci.

2. Hayon selon la revendication précédente, dans lequel le caisson (14) et le panneau (24) comprennent à leur périphérie un retour (28, 30) essentiellement perpendiculaire au reste de la paroi du caisson, le premier joint (26) étant agencé sur ce retour.

3. Hayon selon la revendication 1 ou 2, dans lequel le premier joint (26) comprend une première partie (32) conformée en U pour être emboîtée sur les parois du panneau et du caisson et une deuxième partie (34) s'étendant dans le prolongement des parois et configurée en lèvre ou en tube.

4. Hayon selon l'une quelconque des revendications précédentes, comprenant au moins un élément de fixation (38 ; 54) du caisson et du panneau au niveau de leur périphérie, l'élément de fixation comprenant au moins une languette déformable (52 ; 58A, 58B) apte à se plaquer contre le caisson ou le panneau.

5. Hayon selon l'une des revendications 1 à 4, dans lequel l'élément de fixation (54) est conformé en U et comprend une partie centrale (56) reliant deux tiges latérales (58A, 58B), les deux tiges latérales formant languettes déformables.

6. Hayon selon l'une des revendications 1 à 4, dans lequel l'élément de fixation (38) comprend un corps central (50) se séparant à son extrémité en au moins deux languettes déformables (52).

7. Hayon selon l'une quelconque des revendications 4 à 6, dans lequel le premier joint (26) comprend au moins une armature métallique, le matériau élastomère étant de préférence surmoulé sur l'armature, l'armature comprenant au moins un élément de fixation du caisson et du panneau.

8. Hayon selon l'une quelconque des revendications précédentes dans lequel le premier joint (26) est de section constante.

9. Hayon selon l'une quelconque des revendications précédentes, dans lequel le caisson comprend deux montants latéraux (22) munis chacun d'une gorge (64) agencée sur la surface intérieure du caisson, le premier joint (26) étant apte à être agencé dans la gorge et comprenant de préférence des moyens pour sa fixation, notamment par encliquetage, dans la gorge.

10. Hayon selon la revendication précédente, dans lequel une nervure (66) est agencée dans la gorge (64) à au moins une extrémité longitudinale de celle-ci, la nervure comprenant au moins une partie dont la hauteur diminue continûment.

## Patentansprüche

1. Fahrzeug-Heckklappe (10), die auf einer Fläche (12), die dazu bestimmt ist, dem Inneren des Fahrzeugs zugewandt zu werden, wenn die Heckklappe an dem Fahrzeug angebracht ist, eine erste Dichtung (26) umfasst, die bevorzugt aus einem Elastomermaterial ausgebildet ist und sich über den gesamten Umfang der Heckklappe erstreckt, wobei die Heckklappe einen Kasten (12) und eine untere Karosserieplatte (24) umfasst, die an einer Fläche des Kastens angeordnet ist, die dazu bestimmt ist, dem Äußeren des Fahrzeugs zugewandt zu werden, wenn die Heckklappe an dem Fahrzeug angebracht ist, wobei die Platte (24) so ausgebildet ist, dass sie an ihrem Umfang eine Wand (30) umfasst, die an der Wand (28) des Kastens entlang führt, wobei die erste Dichtung (26) an den zwei übereinander liegenden Wänden des Kastens (14) und der Platte (24) eingepasst ist; wobei die Heckklappe **dadurch gekennzeichnet ist, dass** sie eine zweite Dichtung (70) aufweist, die zwischen der Karosserieplatte (24) und dem Kasten (14) an einem Ende der Platte angeordnet ist, das an einer mittigen Öffnung (20) des Kastens entlang führt, wobei die erste Dichtung (26) ferner an mindestens einem Ende der zweiten Dichtung (70) in deren Längsrichtung eingepasst ist.

2. Heckklappe nach dem vorhergehenden Anspruch, wobei der Kasten (14) und die Platte (24) an ihrem Umfang einen Rücklauf (28, 30) umfassen, der zu der übrigen Wand des Kastens im Wesentlichen lotrecht ist, wobei die erste Dichtung (26) an diesem Rücklauf vorgesehen ist.

3. Heckklappe nach Anspruch 1 oder 2, wobei die erste Dichtung (26) einen ersten Teil (32) umfasst, der U-förmig ausgebildet ist, um an den Wänden der Platte und des Kastens eingepasst zu werden, und einen zweiten Teil (34) umfasst, der sich in der Verlängerung der Wände erstreckt und als Lippe oder als Rohr ausgebildet ist.

4. Heckklappe nach einem der vorhergehenden Ansprüche, umfassend mindestens ein Element (38; 54) zur Befestigung des Kastens und der Platte im Bereich ihres Umfangs, wobei das Befestigungselement mindestens eine verformbare Zunge (52; 58A; 58B) umfasst, die dafür angepasst ist, gegen den Kasten oder die Platte gepresst zu werden.

5. Heckklappe nach einem der Ansprüche 1 bis 4, wobei das Befestigungselement (54) U-förmig ausgebildet ist und einen mittigen Teil (56) zur Verbindung von zwei seitlichen Stangen (58A, 58B) umfasst, wobei die zwei seitlichen Stangen verformbare Zungen bilden.

6. Heckklappe nach einem der Ansprüche 1 bis 4, wobei das Befestigungselement (38) einen mittigen Körper (50) umfasst, der sich an seinem Ende in mindestens zwei verformbare Zungen (52) teilt.

7. Heckklappe nach einem der Ansprüche 4 bis 6, wobei die erste Dichtung (26) mindestens eine metallische Bewehrung umfasst, wobei das Elastomermaterial bevorzugt auf die Bewehrung aufgeformt ist, wobei die Bewehrung mindestens ein Element zur Befestigung des Kastens und der Platte umfasst.

8. Heckklappe gemäß einem der vorhergehenden Ansprüche, wobei die erste Dichtung (26) einen konstanten Querschnitt hat.

9. Heckklappe gemäß einem der vorhergehenden Ansprüche, wobei der Kasten zwei seitliche Holme (22) umfasst, die jeder mit einer Rille (64) versehen sind, die an der Innenfläche des Kastens vorgesehen ist, wobei die erste Dichtung (26) angepasst ist, um in der Rille angeordnet zu werden, und bevorzugt Mittel für ihre Befestigung, insbesondere durch Einrasten, in der Rille umfasst.

10. Heckklappe nach dem vorhergehenden Anspruch, wobei eine Rippe (66) in der Rille (64) an mindestens einem Längsende von dieser vorgesehen ist, wobei die Rippe mindestens einen Teil umfasst, dessen Höhe kontinuierlich abnimmt.

## Claims

1. Vehicle tailgate (10) comprising a surface (12) intended to face towards the inside of the vehicle when the tailgate is mounted on the vehicle, a first seal (26), made preferably from an elastomer material, extending around the entire periphery of the tailgate, the tailgate comprising a box (14) and an inner bodywork panel (24) placed on a surface of the box intended to face towards the outside of the vehicle when the tailgate is mounted on the vehicle, the panel (24) being arranged so that it comprises at its periphery a wall (30) along the wall (28) of the box, the first seal (26) being fitted on the two superimposed walls of the box (14) and of the panel (24); the tailgate being **characterised in that** it comprises a second seal (70) placed between the bodywork panel (24) and the box (14) at one end of the panel along a central opening (20) of the box, the first seal (26) also being fitted on at least one end of the second seal (70) in the longitudinal direction thereof.

2. Tailgate according to the preceding claim, wherein the box (14) and the panel (24) comprise at their periphery a return (28, 30) substantially perpendicular to the rest of the box wall, the first seal (26) being arranged on this return.

3. Tailgate according to claim 1 or 2, wherein the first seal (26) comprises a first U-shaped portion (32) to be fitted onto the walls of the panel and of the box and a second portion (34) extending in the extension of the walls and configured as a lip or as a tube.

4. Tailgate according to any of the preceding claims, comprising at least one fastening element (38; 54) at the periphery of the box and of the panel, the fastening element comprising at least one deformable tab (52; 58A, 58B) adapted to be pressed against the box or the panel.

5. Tailgate according to one of claims 1 to 4, wherein the fastening element (54) is U-shaped and comprises a central portion (56) connecting two lateral rods (58A, 58B), the two lateral rods forming deformable tabs.

6. Tailgate according to one of claims 1 to 4, wherein the fastening element (38) comprises a central body (50) separating at its end into at least two deformable tabs (52).

7. Tailgate according to any of claims 4 to 6, wherein the first seal (26) comprises at least one metal frame, the elastomer material being preferably overmoulded on the frame, the frame comprising at least one element for fastening the box and the panel.

8. Tailgate according to any of the preceding claims, wherein the first seal (26) has a constant cross-section.

9. Tailgate according to any of the preceding claims, wherein the box comprises two lateral uprights (22) each provided with a groove (64) arranged on the inner surface of the box, the first seal (26) being adapted to be arranged in the groove and preferably comprising means for its attachment, in particular by clipping, in the groove.

10. Tailgate according to the preceding claim, wherein a rib (66) is arranged in the groove (64) at at least one longitudinal end thereof, the rib comprising at least one portion whose height decreases continuously.
